# EUROPEAN PATENT APPLICATION

(11) **EP 2 874 130 A1**
(43) Date of publication of application: **20.05.2015**
(21) Application number: 14176375.5
(22) Date of filing: 09.07.2014
(51) Int. Cl.: G08C 17/00

(54) **Communication apparatus, communication system and communication method**

(30) Priority: 19.11.2013 JP 2013238383
(71) Applicant: Toshiba Lighting & Technology Corporation, Yokosuka-shi Kanagawa 237-8510 (JP)
(72) Inventor: Terashima, Yoshiki, Kanagawa, 237-8510 (JP)
(74) Representative: Bokinge, Ole

(57) **Abstract**

According to one embodiment, a communication apparatus (2) includes a communication part (21) which receives a notification concerning measurement information from a measurement equipment (3) and receives a signal from a terminal apparatus (1), and a notification setting part (22) to set a notification frequency of the measurement equipment (3) according to content of the signal received from the terminal apparatus (1).

## Description

### FIELD

Embodiments described herein relate generally to a communication apparatus, a communication method and a communication system.

### BACKGROUND

A system is known which collects, visualizes and presents electric power or other energy information through a network. For example, a system is known which displays time-dependent change of home power consumption.

However, in the system as stated above, monitoring of power consumption is required at any time, and load is applied to communication and arithmetic processing of equipment. Besides, a power monitoring system is known in which newest power consumption information is obtained only when a user desires. Further, a storage battery state notification system is known in which the notification frequency of a battery state is determined by the change amount of the battery state, and for example, when the change of power consumption is large, more detailed information is acquired.

However, in the power monitoring system as stated above, since measurement of power data is performed at every prescribed period, a tradeoff occurs between information granularity and processing load.

Besides, in the storage state notification system, since the notification frequency is determined according to the measured change amount of the equipment state, there is a case where information cannot be notified at a fine granularity in a period from the change of the equipment state to the determination of the notification frequency, that is, immediately before and after the change of the equipment state.

Exemplary embodiments described herein change a notification frequency of measurement equipment according to a signal from a terminal apparatus and enable measurement information to be acquired.

### BRIEF DESCRIPTION OF THE DRAWINGS

FIG. 1 is a structural view of a system of an embodiment.
FIG. 2 is a block diagram showing a communication apparatus of the embodiment.
FIG. 3 is a flowchart showing an operation of a system of a first embodiment.
FIG. 4 is a flowchart showing an operation of a system of a second embodiment.
FIG. 5 is a flowchart showing an operation of a system of the second embodiment.
FIG. 6 is a flowchart showing an operation of a system of a third embodiment.

### DETAILED DESCRIPTION

In general, according to one embodiment, a communication apparatus includes a communication part which receives a notification concerning measurement information from a measurement equipment and receives a signal from a terminal apparatus, and a notification setting part to set a notification frequency of the measurement equipment according to content of the signal received from the terminal apparatus.

Besides, in the communication apparatus, the measurement equipment notifies the measurement information when a change of measurement value exceeds a specified threshold, and the notification setting part sets the notification frequency by specifying the threshold.

Besides, in the communication apparatus, the measurement equipment notifies at a notification time interval, and the notification setting part sets the notification frequency by specifying the time interval.

Besides, in the communication apparatus, when the signal is a control instruction to a control target equipment, the communication part has a function to transmit the control instruction to the control target equipment, and the notification setting part sets the notification frequency of the measurement equipment to be high before the communication part transmits the control instruction to the control target equipment.

Besides, in the communication apparatus, when the signal is a signal to request notification content concerning the measurement information from the measurement equipment, the notification setting part sets the notification frequency of the measurement equipment to be high.

Besides, in the communication apparatus, when the signal is demand response information including a time, the notification setting part sets the notification frequency of the measurement equipment to be high before the time.

Besides, in the communication apparatus, when the signal is demand response information including a start time and a stop time, the notification setting part sets the notification frequency of the measurement equipment to be high before the start time, and sets the notification frequency of the measurement equipment to be low after the stop time.

Besides, according to another embodiment, a communication method in a communication apparatus which receives a notification from a measurement equipment and receives a signal from a terminal apparatus includes receiving the notification and the signal, and setting a notification frequency of the measurement equipment according to content of the signal.

Besides, according to still another embodiment, a communication system includes a communication apparatus which receives a notification from a measurement equipment and receives a signal from a terminal apparatus, and the communication apparatus includes a reception part to receive the notification and the signal, and a notification setting part to set a notification frequency of the measurement equipment according to content of the signal.

Hereinafter, a lighting unit and a luminaire according to an embodiment will be described with reference to the drawings. In the embodiment, the same portions are denoted by the same reference numeral and a duplicate description is omitted.

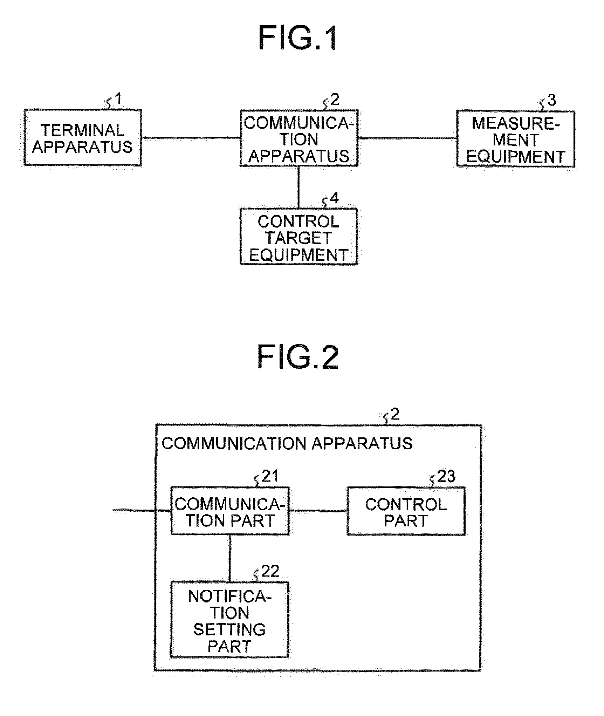

FIG. 1 is a block diagram showing a structure of a system of an embodiment. The system of FIG. 1 includes a terminal apparatus 1, a communication apparatus 2, a measurement equipment 3 and a control target equipment 4, which are connected to each other through a wired or wireless network. Plural terminal apparatuses 1, plural measurement equipments 3 and plural control target equipments 4 may be provided for one communication apparatus 2. Incidentally, an arbitrary communication relay apparatus or a protocol conversion apparatus may be provided between these apparatuses, and arbitrary communication means such as ECHONET/ECHONET Lite, UPnP or HTTP may be used between the apparatuses.

Incidentally, the terminal apparatus 1 and the communication apparatus 2 may be one integrally constructed apparatus, and the measurement equipment 3 and the control target equipment 4 may also be one integrally constructed equipment. That is, these may be physically one apparatus, or may be plural separately constructed apparatuses communicating with each other through arbitrary communication means.

The terminal apparatus 1 is a general terminal having a display function and a function to transmit and receive a prescribed signal to and from the communication apparatus 2, and is, for example, a personal computer (PC) with a Web browser, a tablet or a television. The prescribed signal is, for example, a signal to acquire power information from the measurement equipment 3 through the communication apparatus 2, or a control instruction to control the control target equipment 4 through the communication apparatus 2. Incidentally, the display function and the signal transmission and reception function may be dispersively provided in the plural terminal apparatuses 1. Alternatively, the terminal apparatus 1 may be a smart meter having the function to transmit and receive the prescribed signal to and from the communication apparatus 2. In this case, the prescribed signal is, for example, a signal including demand response information received from a power company.

Here, the demand response information is information transmitted from a power supplier in order to urge the receiver to suppress power consumption, and includes various information according to a mode of demand response to be performed. For example, rate-based information can be cited in which different electricity rates are set for respective time zones. At this time, the demand response information includes time information. In the following description, "the demand response information including the time" is information to encourage suppression of power consumption and is information including a start time and a stop time of a time zone to encourage the suppression, or information including one of the start time and the stop time. In this embodiment, a power usage peak time zone and an electricity rate set to be relatively high in the time zone are transmitted as the demand response information including the time from the power company to the terminal apparatus 1.

FIG. 2 is a block diagram showing the communication apparatus 2 of the embodiment. The communication apparatus 2 includes a communication part 21, a notification setting part 22 and a control part 23. The communication part 21 has a function to receive a notification concerning measurement information from the measurement equipment 3, a function to hold the measurement information, and a function to provide the user with the measurement information in an arbitrary form if necessary. The notification setting part 22 has a function to set a notification frequency of the notification from the measurement equipment 3. The control part 23 controls the control target equipment 4. Besides, the control part 23 may have, as a general HEMS (Home Energy Management System) equipment, a function to automatically control the control target equipment 4 by the demand response information or the like.

Here, the notification frequency may be set by a time interval as a period of performing the notification or by a threshold of change of a prescribed state value as a condition of performing the notification. For example, when "the notification frequency is set to be high", this can be realized by changing the notification interval from 30 seconds to 10 seconds or by changing the notification condition from a change value of ±30W in instantaneous power consumption amount to ±10W, Besides, when the plural measurement equipments 3 exist, the total value of the notification frequencies of the respective measurement equipments 3 or timings may be adjusted to suppress a case in which notifications from the respective measurement equipments 3 occur at very close timings, and exceed the band of the network or the processing capacity of the communication apparatus 2.

The measurement equipment 3 is an apparatus to notify the communication apparatus 2 of prescribed measurement information, and is a power measurement equipment to measure power information such as home use power, use power amount, power or power amount generated by a power generator, and power balance between generated power and used power. The measurement equipment 3 notifies the communication apparatus 2 periodically or when the change of prescribed state value exceeds a certain threshold. For example, if the measurement equipment 3 measures the home use power, the measurement value may be notified at an interval of 30 seconds, or the measurement value may be notified when the power use amount measured in a unit time changes to exceed ±30W.

The control target equipment 4 is an equipment which can be controlled by the control function of the communication apparatus 2. The measurement value of the measurement equipment 3 is changed by a change of an operation state of the control target equipment 4. The control target equipment 4 is, for example, a network compatible air conditioner in which when the stop state is changed to the operation state, the power consumption amount measured by the power measurement equipment is increased.

### First Embodiment

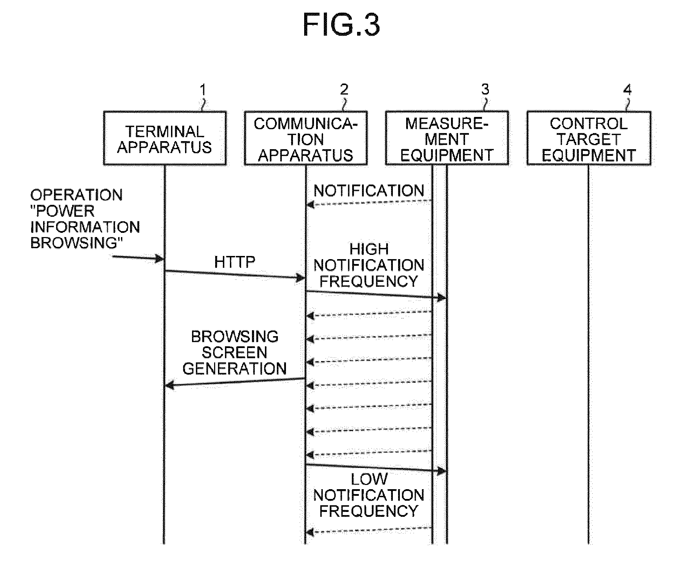

In a first embodiment, when a signal from the terminal apparatus 1 is received, for example, when the user requests browsing of power information to the communication apparatus 2 through the terminal apparatus 1, the communication apparatus 2 enables a screen of visualized power information to be browsed on the terminal apparatus 1. In the first embodiment, the terminal apparatus 1 is a PC with a Web browser on which the change state of the power information is browsed. Besides, the communication apparatus 2 has a Web server function to generate and provide the visualized browsing screen based on the power information notified from the measurement equipment. In general, although history of past power information may be rough, information of power balance during browsing is desirably provided at a fine granularity. This communication sequence will be described with reference to FIG. 3.

FIG. 3 is a sequence view showing the communication operation of the system of the first embodiment. In a normal state, notification concerning measurement information is performed from the measurement equipment 3 to the communication apparatus 2 at a low frequency. Here, it is assumed that the user accesses the Web server of the communication apparatus 2 from the Web browser of the terminal apparatus 1.

When detecting the HTTP access to the Web server, the communication apparatus 2 sets the notification frequency of the measurement equipment 3 to be high, generates the browsing screen of power information and transmits to the terminal apparatus 1. Here, the notification frequency is set to be high in such a manner that, for example, if ECHONET/ECHONET Lite is used for communication, a property code is defined as "notification frequency of measurement value", and a property value is defined as "notification time interval" or "threshold of change of measurement value to be notified", and the notification time interval is set to be 10 seconds which is shorter than 30 seconds at normal time, or the threshold of the change of the power measurement value is set to be ±10W which is smaller than ±30W at normal time.

Incidentally, the communication apparatus 2 may perform such setting that the notification frequency is reduced after the notification frequency of the measurement equipment 3 is set to be high. Here, the notification frequency is set to be low in such a manner that, the notification frequency may be returned to the notification frequency at the normal time or the notification frequency may be reduced stepwise. The setting timing of reducing the notification frequency may be determined based on information such as, for example, a time when a prescribed time passes since the browsing screen is generated, a time when the user transitions from the browsing screen of the power information to another Web page, or a time when the effective period of an authentication required for browsing of the screen expires. Alternatively, the measurement equipment 3 may have a function to automatically reduce the notification frequency after a prescribed time passes since the notification frequency is set to be high, or after a prescribed number of times of notification.

### Effects of the First Embodiment

According to the first embodiment, since the measurement information is obtained at a finer granularity than that at the normal time only when the user browses the power information, the finely renewed information can be browsed without the load of constant communication and arithmetic processing. By this, the user can control the home equipment while browsing the power information almost in real time.

### Second Embodiment

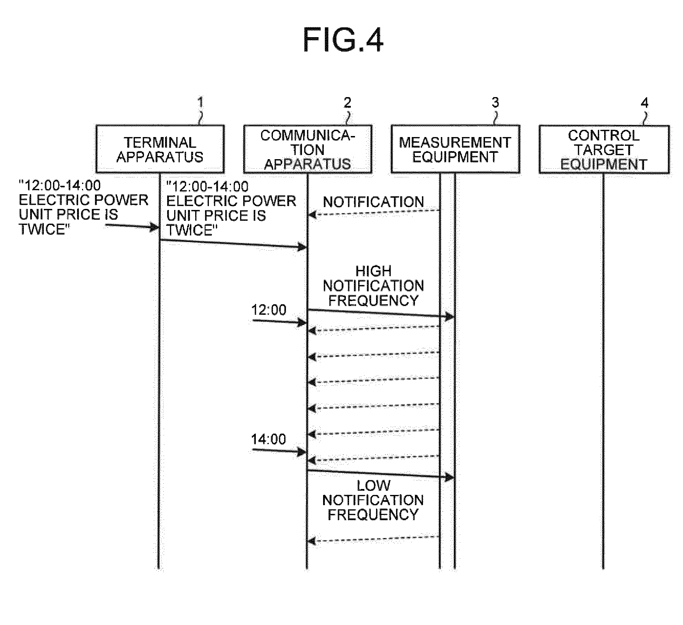

In a second embodiment, the terminal apparatus 1 is a smart meter which has a function to receive demand response information from the power company and to transfer a signal including the demand response information to the communication apparatus 2 provided with an HEMS function. In the second embodiment, it is assumed that the demand response information is, for example, such that "electric power unit price at 12:00 to 14:00 is twice". In general, since a home equipment is manually controlled by a user or is automatically controlled by the HEMS function of the communication apparatus 2 before or after the time of change of the electric power unit price, the power information in the house is significantly changed. Thus, the power information before or after the time of change of the electric power unit price is desirably measured at a fine granularity. A sequence indicating this communication operation will be described by use of FIG. 4.

FIG. 4 is a sequence view showing the communication operation of the system of the second embodiment. In a normal state, notification concerning measurement information is performed from the measurement equipment 3 to the communication apparatus 2 at a low frequency. Here, it is assumed that as the demand response information from the power company, the information that "electric power unit price is twice at 12:00 to 14:00" is transmitted from the smart meter to the communication apparatus 2.

The communication apparatus 2 sets the notification frequency of the measurement equipment 3 to be high at a time earlier by a prescribed time than the start time 12:00 of the time zone information included in the demand response information. Here, the notification frequency is set to be high in such a manner that, for example, if ECHONET/ECHONET Lite is used for communication, a property code is defined as "notification frequency of measurement value", and a property value is defined as "notification time interval" or "threshold of change of measurement value to be notified", and the notification time interval is set to be 10 seconds which is shorter than 30 seconds at normal time, or the threshold of the change of the power measurement value is set to be ±10W which is smaller than ±30W at normal time. Next, after a prescribed time passes from the stop time 14:00 of the time zone information included in the demand response information, the communication apparatus 2 sets the notification frequency of the measurement equipment 3 to be low. Here, the notification frequency is set to be low in such a manner that the notification frequency is returned to the notification frequency at the normal time or the notification frequency is reduced stepwise.

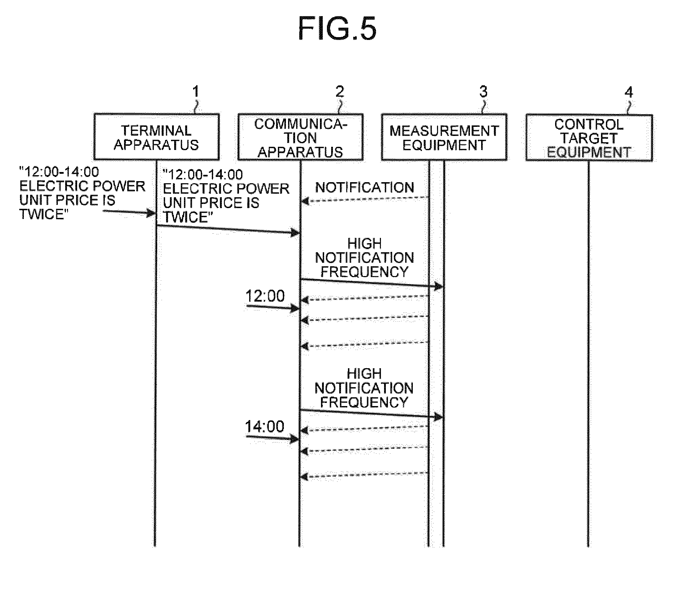

Incidentally, as in FIG. 5, the communication apparatus 2 may set the notification frequency in such a manner that the notification frequency of the measurement equipment 3 is set to be high at a time earlier by a prescribed time than the time 12:00 when the electric power unit price changes, and after a prescribed time or a prescribed number of times of notification, the notification frequency of the measurement equipment 3 is set to be low automatically or by the communication apparatus 2, or after the notification frequency is set to be high, the notification frequency is reduced stepwise at an interval of prescribed time. Further, the notification frequency may be again set to be high at a time earlier by a prescribed time than the time 14:00 when the electric power unit price is again changed. Also in this case, after a prescribed time passes from the time when the notification frequency is set to be high, or after a prescribed number of times of notification, the notification frequency of the measurement equipment 3 is set to be low automatically or by the communication apparatus 2, or the notification frequency may be reduced stepwise at an interval of prescribed time after the notification frequency is set to be high.

Besides, as the function of the HEMS equipment, the communication apparatus may automatically control the control target equipment 4 according to the content of the demand response information. The communication apparatus may have a function to transmit a control instruction to the control target equipment 4 automatically or according to the setting of the user. The control instruction is such that for example, when the content that electric power unit price in a time zone is higher than that at a normal time is received, the control target equipment 4 is placed into a state of low power consumption at the start time of the time zone or at a time earlier by a prescribed time than the start time, and is returned to the original state at the stop time or after a prescribed time passes from the stop time.

Incidentally, the operation of the communication apparatus 2 when the demand response information is received may be stored at the time of shipment of the communication apparatus 2, or may be set by the user, or may be obtained from an arbitrary storage device through a network.

### Effects of the Second Embodiment

According to the second embodiment, in accordance with the demand response information, the measurement information at a fine granularity can be acquired before or after the time when the change of the power information is expected to be large, or in the time zone. By this, the energy saving effect by the demand response is more accurately visualized and can be provided to the user.

### Third Embodiment

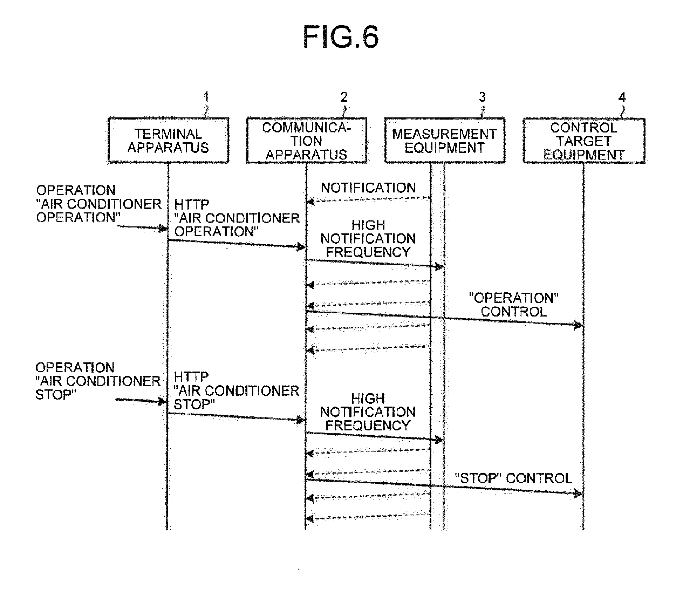

In a third embodiment, the user controls the control target equipment 4 through the terminal apparatus 1 and the communication apparatus 2. In the third embodiment, the terminal apparatus 1 is a tablet with a Web browser, and the control target equipment 4 is an air conditioner adaptable to ECHONET/ECHONET Lite. Incidentally, the control can be performed such that the tablet transmits a signal including operation content on the browser to a Web server of the communication apparatus 2, and the communication apparatus 2 generates a suitable ECHONET/ECHONET Lite packet according to the signal, and transmits the control packet to the air conditioner. Thus, the terminal apparatus 1 may not have the ECHONET/ECHONET Lite communication function. In general, since home use power is significantly changed by the air conditioner operation state, power information before and after the operation or stop is preferably measured at a fine granularity and can be presented. A sequence indicating the communication operation will be described by use of FIG. 6

FIG. 6 is a sequence view showing the communication operation of the system of the third embodiment. In a normal state, notification concerning measurement information is performed from the measurement equipment 3 to the communication apparatus 2 at a low frequency.

Here, when the user operates an "operation" button from "air conditioner operation screen" displayed on the Web browser of the terminal apparatus 1, a signal including the operation information of content of "air conditioner operation" is transmitted from the terminal apparatus 1 to the communication apparatus 2 via HTTP.

When detecting the operation information of "air conditioner operation", the communication apparatus 2 sets the notification frequency of the measurement equipment 3 to be high. Here, the notification frequency is set to be high in such a manner that, for example, if ECHONET/ECHONET Lite is used for communication, a property code is defined as "notification frequency of measurement value", and a property value is defined as "notification time interval" or "threshold of change of measurement value to be notified", and the notification time interval is set to be 10 seconds which is shorter than 30 seconds at normal time, or the threshold of the change of the power measurement value is set to be ±10W which is smaller than ±30W at normal time.

Subsequently, the communication apparatus 2 generates a suitable ECHONET/ECHONET Lite packet corresponding to the received operation information of "air conditioner operation", and transmits the control packet to the control target equipment 4, that is, the air conditioner. At this time, the measurement equipment 3 preferably already performs the notification at a high notification frequency.

After a prescribed time passes since the notification frequency is set to be high or after a prescribed number of times of notification, the notification frequency of the measurement equipment 3 is set to be low automatically or by the communication apparatus 2. Alternatively, the notification frequency is reduced stepwise at an interval of prescribed time.

Next, when the user operates a "stop" button from "air conditioner operation screen" displayed on the Web browser of the terminal apparatus 1, the operation information of content of "air conditioner stop" is transmitted from the terminal apparatus 1 to the communication apparatus 2 via HTTP. When detecting the operation information of "air conditioner stop", the communication apparatus 2 sets the notification frequency of the measurement equipment 3 to be high. Subsequently, the communication apparatus 2 generates a suitable ECHONET/ECHONET Lite control packet corresponding to the received operation information of "air conditioner stop", and transmits the control packet to the control target equipment 4, that is, the air conditioner. At this time, the measurement equipment 3 preferably already performs the notification at a high notification frequency.

The notification frequency setting rule corresponding to the operation information may be stored at the time of shipment of the communication apparatus 2, may be set by the user, or may be obtained from an arbitrary storage device through a network.

### Effects of the Third Embodiment

According to the third embodiment, when detecting the operation signal indicating the change of the measurement information, the communication apparatus sets the notification frequency to be high before the measurement value is changed, and the measurement information before and after the change can be acquired at the fine granularity. By this, the change of the measurement information by the operation of the control target equipment can be more accurately grasped.

Incidentally, the invention is not limited to the above embodiments, and can be embodied at the practical stage by modifying the components within the scope not departing from the gist.

For example, the communication apparatus does not set the notification frequency of the measurement equipment, but the measurement equipment itself may set "frequency at which the communication apparatus inquires the measurement equipment". Alternatively, if the measurement equipment includes a storage device capable of storing a certain amount of notification content, "frequency at which a value is recorded in the storage device" may be set.

Further, various inventions can be formed by appropriately combining the plural components disclosed in the embodiments. For example, some components may be deleted from the components disclosed in the embodiment, or the components in the different embodiments may be appropriately combined.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A communication apparatus comprising:
a communication part which receives a notification concerning measurement information from a measurement equipment and receives a signal from a terminal apparatus; and
a notification setting part to set a notification frequency of the measurement equipment according to content of the signal received from the terminal apparatus.

2. The apparatus according to claim 1, wherein
the measurement equipment notifies the measurement information when a change of measurement value exceeds a specified threshold, and
the notification setting part sets the notification frequency by specifying the threshold.

3. The apparatus according to claim 1, wherein
the measurement equipment notifies at a notification time interval, and
the notification setting part sets the notification frequency by specifying the time interval.

4. The apparatus according to any one of claims 1 to 3, wherein
when the signal is a control instruction to a control target equipment,
the communication part has a function to transmit the control instruction to the control target equipment, and
the notification setting part sets the notification frequency of the measurement equipment to be high before the communication part transmits the control instruction to the control target equipment.

5. The apparatus according to any one of claims 1 to 4,
wherein
when the signal is a signal to request notification content concerning the measurement information from the measurement equipment,
the notification setting part sets the notification frequency of the measurement equipment to be high.

6. The apparatus according to any one of claims 1 to 4, wherein
when the signal is demand response information including a time,
the notification setting part sets the notification frequency of the measurement equipment to be high before the time.

7. The apparatus according to any one of claims 1 to 4, wherein
when the signal is demand response information including a start time and a stop time,
the notification setting part sets the notification frequency of the measurement equipment to be high before the start time, and sets the notification frequency of the measurement equipment to be low after the stop time.

8. A communication system comprising:
a measurement equipment to transmit a notification concerning measurement information to a communication apparatus;
a terminal apparatus to transmit a signal to the communication apparatus; and
the communication apparatus according to any one of claims 1 to 7.

9. A communication method in a communication apparatus which receives a notification from a measurement equipment and receives a signal from a terminal apparatus, comprising:
receiving the notification and the signal; and
setting a notification frequency of the measurement equipment according to content of the signal.
